# EUROPEAN PATENT SPECIFICATION

(11) **EP 1 164 266 B1**
(45) Date of publication and mention of the grant of the patent: **07.10.2009**
(21) Application number: 01303950.8
(22) Date of filing: 30.04.2001
(51) Int. Cl.: F01N 3/20

(54) **Method of optimizing reductant addition to an SCR catalyst coupled to an internal combustion engine**
Verfahren zur Optimierung der Zugabe eines Reduktionmittels zu einem SCR-Katalysator einer Brennkraftmaschine
Procédé pour l'optimisation de l'addition d'un reducteur à un catalyseur SCR d'un moteur à combustion interne

(30) Priority: 13.06.2000 US 592202
(43) Date of publication of application: 19.12.2001
(73) Proprietor: Ford Global Technologies, Inc., Dearborn, Michigan 48126 (US)
(72) Inventor: Lambert, Christine Kay, Westland, Michigan 48186 (US); Adams, Karen M., Ann Arbor, Michigan 48103 (US); Hammerle, Robert Henry, Franklin, Michigan 48025 (US)
(74) Representative: Messulam, Alec Moses

(56) References cited:
- EP-A- 0 263 183
- US-A- 5 540 047

## Description

The invention relates to controlling ammonia injection upstream of a selective reduction catalyst coupled to an internal combustion engine.

In order to meet emission regulations, selective catalytic reduction systems using externally added reducing agents may be used. In such a system, regulated emissions, such as nitrogen oxides, or NOx, can be reduced in an oxygen-rich environment to nitrogen and water over a catalyst when a reducing agent, such as ammonia, is added. In addition to controlling nitrogen oxide emissions, the amount of excess ammonia, or ammonia slip, must be managed. Ammonia slip is experienced when ammonia in excess of that used to reduce the nitrogen oxides passes through the catalyst unaffected and exits the catalyst (as ammonia slip).

One method for regulating ammonia slip is to use an ammonia sensor located downstream of the catalyst. The detected ammonia concentration is compared with a fixed upper threshold value. This comparison generates a correction signal that is used to control the metering of ammonia upstream of the catalyst. Allegedly, by regulating actual ammonia slip to the upper threshold value, a certain nitrogen oxide reduction is obtained. Such a system is disclosed in U.S. Patent 5,369,956.

US 5540047A discloses a selective catalytic reduction catalyst with an upstream reductant injection and a downstream combined nitrogen monoxyde NO and ammonia NH₃ sensor and a method for controlling NO and NH₃ emissions.

Another method for regulating nitrogen oxide emissions and ammonia slip is to use an after-catalyst NOx sensor to detect nitrogen oxide concentration. Control of NOx emissions is achieved by varying reductant injection until the level or quantity of nitrogen oxides as measured by the sensor falls within an acceptable limit. The amount of reductant injected to keep NOx emissions within the acceptable limit needs to be balanced with an ammonia slip limit. This can be measured and controlled by an after-catalyst ammonia sensor. Such a system is disclosed in U.S. Patent 5,233,934. Alternatively, ammonia slip can be calculated and controlled using an algorithm. Such a system is disclosed in U.S. Patent 4,751,054.

In general, as maximum NOx conversion is approached with increasing ammonia addition (i.e., increasing NH3/NOx molar ratio), ammonia starts to slip. After maximum NOx conversion is attained, ammonia slip increases more rapidly with increasing NH3/NOx. For example, if ammonia slip is regulated to a constant concentration value, an ammonia setting high enough for sufficient NOx conversion at high NOx feed gas levels is likely excessive for low NOx feed gas levels, thereby wasting ammonia. Conversely, a setting at minimum detectable ammonia concentration is likely insufficient to provide high NOx conversion at high NOx feed gas levels. Further, intermediate settings may still be insufficient to provide high enough NOx conversion at high NOx feed gas levels. Thus, prior approaches cannot achieve high NOx conversion with minimal ammonia slip, particularly for vehicle engines where NOx concentration levels varies widely and quickly. In other words, because a catalyst experiences widely varying levels of engine NOx, controlling to an ammonia slip concentration results in widely varying, and less than optimum, NOx conversion efficiency.

In accordance with the present invention, a method for controlling reductant injection into a catalyst coupled to an internal combustion engine having the features of independent claim 1 and an engine controller having means for controlling ammonia reductant injection upstream of a selective catalytic reduction catalyst coupled to an internal combustion engine having the features of independent claim 4 are provided.

The invention will now be described further, by way of example, with reference to the accompanying drawings, in which:
Figure 1 is a schematic block diagram illustrating the present invention; and
Figure 2 is a flowchart of a method embodying the present invention.

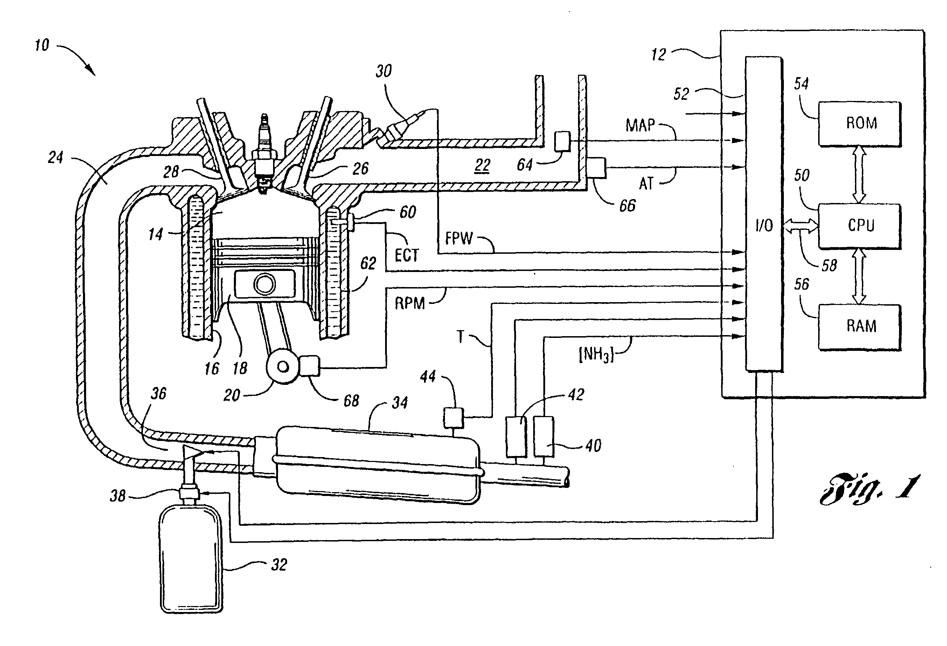

Referring now to the drawing and initially to Figure 1, internal combustion engine 10, comprising a plurality of cylinders, one cylinder of which is shown in Figure 1, is controlled by electronic engine controller 12. Engine 10 includes combustion chamber 14 and cylinder walls 16 with piston 18 positioned therein and connected to crankshaft 20. Combustion chamber 14 is shown communicating with intake manifold 22 and exhaust manifold 24 via respective intake valve 26 and exhaust valve 28. Intake manifold 22 is also shown having fuel injector 30 coupled thereto for delivering liquid fuel in proportion to the pulse width of signal FPW from controller 12. Both fuel quantity, controlled by signal FPW and injection timing are adjustable. Fuel is delivered to fuel injector 30 by a conventional fuel system (not shown) including a fuel tank, fuel pump, and fuel rail (not shown). Alternatively, the engine may be configured such that the fuel is injected directly into the cylinder of the engine, which is known to those skilled in the art as a direct injection engine.

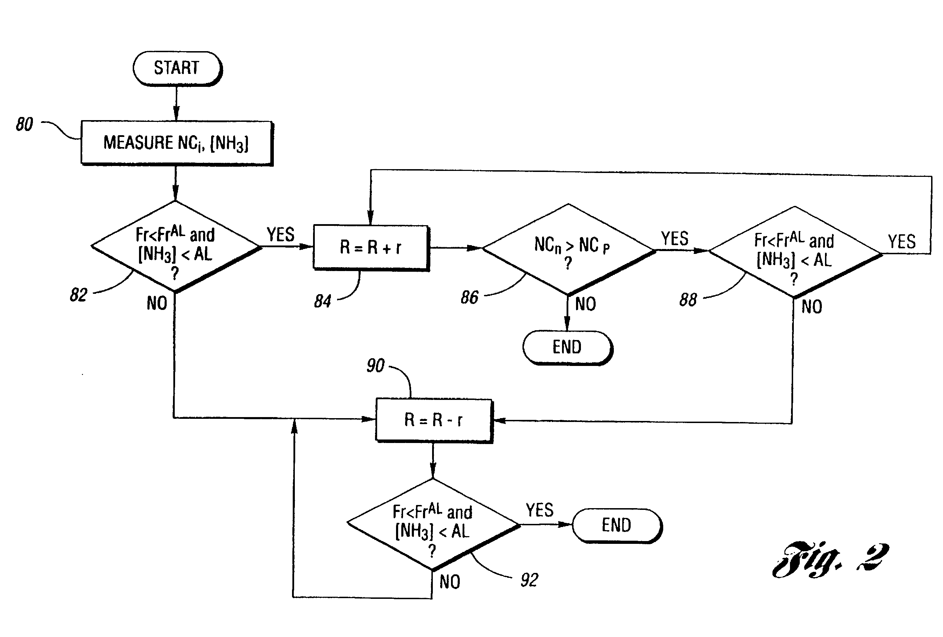

Reducing agent, for example, ammonia, is stored in storage vessel 32 coupled to exhaust manifold 24 upstream of a selective reduction catalyst 34. Control valve 36 controls the quantity of reducing agent delivered to the exhaust gases entering catalyst 34. Pump 38 pressurizes the reducing agent supplied to control valve 36. Both pump 38 and control valve 36 are controlled by controller 12.
Ammonia sensor 40 and NOx sensor 42 are shown coupled to exhaust manifold 24 downstream of catalyst 34. Temperature sensor 44 coupled to catalyst 34 provides an indication of the temperature (T) of catalyst 34. Alternatively, catalyst temperature (T) could be estimated using methods known to those skilled in the art and suggested by this disclosure. Ammonia sensor 40 provides an indication of ammonia concentration [NH3] to controller 12 for determining a control signal sent to control valve 36 as described later herein with particular reference to Figure 2.

NOx sensor 42 provides an indication of NOx concentration which is used with the expected engine out NOx level to indicate the level of NOx conversion to controller 12 for determining a control signal sent to control valve 36 as described later herein with particular reference to Figure 2. The engine out NOx level may be predicted using methods known to those skilled in the art and suggested by this disclosure.

Controller 12 is shown in Figure 1 as a conventional microcomputer including: microprocessor unit 50, input/output ports 52, read-only memory 54, random access memory 56, and a conventional data bus 58. Controller 12 is shown receiving various signals from sensors coupled to engine 10, in addition to those signals previously discussed, including: engine coolant temperature (ECT) from temperature sensor 60 coupled to cooling sleeve 62; a measurement of manifold pressure (MAP) from pressure sensor 64 coupled to intake manifold 22; a measurement (AT) of manifold temperature from temperature sensor 66; an engine speed signal (RPM) from engine speed sensor 68 coupled to crankshaft 20.

Referring now to Figure 2, a flowchart of the method of the present invention is shown. The variables discussed hereinafter are:
NC = NOx conversion
NCi = initial value of NC
NCn = next value of NC
NCp = previous value of NC
R = NH3/NOx molar ratio
r = value by which to increase or decrease R
Fr = fraction of reductant fed into the catalyst that is measured after the catalyst as ammonia
FrAL = highest allowable Fr
[NH3] = ammonia concentration level
AL = allowable level of ammonia post-catalyst

The initial NOx conversion NCi and ammonia concentration [NH3] are measured at block 80. If the initial ammonia concentration is less than an allowable level of post-catalyst ammonia, AL, and the fraction of reductant fed into the catalyst that is measured after the catalyst as ammonia, Fr, is less than an allowable fraction Fr^{AL}, all as determined in block 82, then as indicated in block 84, the amount of reductant is increased to achieve a mole ratio R = R + r, where r is a predetermined increase in the ratio. As long as the next value of NOx conversion NCn is greater than the previous value of NOx conversion NCp as determined in decision block 86, and the ammonia concentration is kept below the allowable fraction and level as indicated in decision block 88, the amount of reductant is increased by adding r to R. If the ammonia concentration is above the allowable fraction or above the allowable level, as determined in decision block 82 or decision block 88, the amount of reductant injected is decreased as indicated in block 90 until the ammonia concentration is below the allowable fraction and level as determined by decision block 92.

Molar ratio (R) is the ratio of the number of moles of ammonia to the number of moles of nitrogen oxide in engine out exhaust gas. The moles of nitrogen oxide in engine out exhaust gas is calculated based on experimentally determined relationships between nitrogen oxide quantity and engine operating conditions known to those skilled in the art to be indicative of estimated engine out nitrogen oxide quantity (NOx^{est}) such as, for example, engine speed, manifold pressure (MAP), intake air temperature (AT), injection timing, injection quantity (FPW), and engine coolant temperature (ECT).

## Claims

1. A method for controlling ammonia reductant injection into a selective catalytic reduction catalyst (34) coupled to an internal combustion engine (10), **characterised in that** the method comprises the steps of measuring using a NOx sensor (42) the NOx downstream from the catalyst (34), measuring using an ammonia sensor (40) the ammonia downstream from the catalyst (34), determining an ammonia slip fraction using the measurement of ammonia from the ammonia sensor (40) and a value for the ammonia injected, comparing the ammonia slip fraction with a highest allowable ammonia slip fraction, comparing the ammonia concentration measured downstream from the catalyst (34) by the ammonia sensor (40) with an allowable level of ammonia post catalyst and increasing the amount of ammonia reductant injected by a predetermined amount if the post-catalyst ammonia concentration is less than the allowable level and the ammonia slip fraction is less than the highest allowable ammonia slip fraction, else decreasing the amount of reductant injected by the predetermined amount until the ammonia concentration is below the allowable fraction and level and, if the amount of ammonia injected is increased, determining a NOx conversion from the NOx value measured by the NOx sensor and a prediction of NOx upstream from the catalyst, comparing the NOx conversion after an increase in injected ammonia reductant with the NOx conversion before the increase in ammonia reductant and further increasing the amount of ammonia reductant injected only if the new NOx conversion is greater than the previous value of NOX conversion, the post-catalyst ammonia concentration remains less than the allowable level and the ammonia slip fraction remains less than the highest allowable ammonia slip fraction.

2. A method as claimed in claim 1 wherein the method further comprises decreasing the amount of reductant injected by the predetermined amount if the post-catalyst ammonia concentration does not remain less than the allowable level and the ammonia slip fraction does not remain less than the highest allowable ammonia slip fraction.

3. A method as claimed in Claim 1 or in Claim 2 wherein the predetermined amount of the increase or decrease of injected reductant is sufficient to respectively increase or decrease the ratio NH3/NOx by a predetermined amount.

4. An electronic engine controller (12) having means for controlling ammonia reductant injection upstream of a selective catalytic reduction catalyst (34) coupled to an internal combustion engine (10), said electronic engine controller (12) comprising means being operable to receive a measurement of the NOx downstream from the catalyst (34) from a NOx sensor(42), receive a measurement of the ammonia concentration downstream from the catalyst (34) from an ammonia sensor (40) and comprises means for determining an ammonia slip fraction using the measurement of ammonia from the ammonia sensor (40) and a value for the ammonia injected, means for comparing the ammonia slip fraction with a highest allowable ammonia slip fraction, means for comparing the ammonia concentration measured downstream from the catalyst (34) by the ammonia sensor (40) with an allowable level of ammonia post catalyst, means for increasing the amount of ammonia reductant injected by a predetermined amount if the post-catalyst ammonia concentration is less than the allowable level and the ammonia slip fraction is less than the highest allowable ammonia slip fraction, else means for decreasing the amount of reductant injected by the predetermined amount until the ammonia concentration is below the allowable fraction and level and, if the amount of ammonia injected is increased, means for determining a NOx conversion from the NOx value measured by the NOx sensor and a prediction of NOx upstream from the catalyst, means for comparing the NOx conversion after an increase in injected ammonia reductant with the NOx conversion before the increase in ammonia reductant and means for further increasing the amount of ammonia reductant injected only if the new NOx conversion is greater than the previous value of NOX conversion, the post-catalyst ammonia concentration remains less than the allowable level and the ammonia slip fraction remains less than the highest allowable ammonia slip fraction.

5. An engine controller as claimed in Claim 4 wherein said engine controller further comprises means for decreasing the amount of reductant injected if the post-catalyst ammonia concentration does not remain less than the allowable level and the ammonia slip fraction does not remain less than the highest allowable ammonia slip fraction.

6. An engine controller as claimed in Claim 4 or in Claim 5 wherein the predetermined amount of the increase or decrease of injected reductant is sufficient to respectively increase or decrease the ratio NH3/NOx by a predetermined amount.

## Patentansprüche

1. Verfahren zur Steuerung der Einspritzung von Ammoniakreduktionsmittel in einen an einer Brennkraftmaschine (10) angeschlossenen selektiven Reduktionskatalysator (34),
**dadurch gekennzeichnet, daß** das Verfahren folgende Schritte beinhaltet:
Messen des NO_{X}-Gehaltes stromunterhalb des Katalysators (34) mittels eines NO_{X}-Sensors (42),
Messen des Ammoniakgehaltes stromunterhalb des Katalysators (34) mittels eines Ammoniaksensors (40),
Bestimmen eines Ammoniaküberschußanteils anhand der Ammoniakmessung vom Ammoniaksensor (40) und der eingespritzten Ammoniakmenge, Vergleichen des Ammoniaküberschußanteils mit einem maximal zulässigen Ammoniaküberschußanteil,
Vergleichen der vom Ammoniaksensor (40) stromunterhalb des Katalysators (34) gemessenen Ammoniakkonzentration mit einem zulässigen Wert von Ammoniak nach dem Katalysator, und
Erhöhen der eingespritzten Ammoniakreduktionsmittelmenge um einen vorgegebenen Betrag, wenn die Ammoniakkonzentration nach dem Katalysator kleiner als der zulässige Wert ist, und der Ammoniaküberschußanteil kleiner als der maximal zulässige Ammoniaküberschußanteil ist, sonst Senken der eingespritzten Ammoniakreduktionsmittelmenge um einen vorgegebenen Betrag, bis die Ammoniakkonzentration unter dem zulässigen Anteil und Wert liegt, und, wenn die Menge von eingespritztem Ammoniak erhöht wird,
Bestimmen einer NO_{X}-Wandlung anhand des vom NO_{X}-Sensor gemessenen NO_{X}-Wertes und einer Voraussage von NO_{X} stromoberhalb des Katalysators, Vergleichen der NO_{X}-Wandlung nach der Erhöhung der eingespritzten Ammoniakreduktionsmittelmenge mit der NO_{X}-Wandlung vor der Erhöhung der eingespritzten Ammoniakreduktionsmittelmenge, und
weiteres Erhöhen der Menge an eingespritztem Ammoniakreduktionsmittel nur dann, wenn die neue NO_{X}-Wandlung größer als der vorherige Wert der NO_{X}-Wandlung ist, die Ammoniakkonzentration nach dem Katalysator kleiner als der zulässige Wert bleibt, und der Ammoniaküberschußanteil kleiner als der maximal zulässige Ammoniaküberschußanteil bleibt.

2. Verfahren nach Anspruch 1, worin das Verfahren des weiteren das Absenken der Ammoniakreduktionsmittelmenge um einen vorgegebenen Betrag beinhaltet, wenn die Ammoniakkonzentration nach dem Katalysator nicht kleiner als der zulässige Wert bleibt, und der Ammoniaküberschußanteil nicht kleiner als der maximal zulässige Ammoniaküberschußanteil bleibt.

3. Verfahren nach Anspruch 1 oder Anspruch 2, worin der vorgegebene Betrag der Erhöhung oder Senkung der Reduktionsmitteleinspritzmenge ausreichend ist, das Verhältnis NH₃/NO_{X} jeweils um einen vorgegebenen Betrag zu erhöhen bzw. zu senken.

4. Elektronische Motorsteuerung (12) mit Mitteln zur Steuerung der Einspritzung von Ammoniakreduktionsmittel stromoberhalb eines an einer Brennkraftmaschine (10) angeschlossenen selektiven Reduktionskatalysators (34), wobei besagte elektronische Motorsteuerung (12) folgendes aufweist:
Mittel, welche derart betätigt werden können, daß sie eine Messung des NO_{X}-Gehaltes stromunterhalb des Katalysators (34) von einem NO_{X}-Sensor (42) empfangen, eine Messung der Ammoniakkonzentration stromunterhalb des Katalysators (34) von einem Ammoniaksensor (40) empfangen, und
Mittel zur Bestimmung eines Ammoniaküberschußanteils anhand der Ammoniakmessung vom Ammoniaksensor (40) und des Wertes der eingespritzten Ammoniakmenge,
Mittel zum Vergleichen des Ammoniaküberschußanteils mit einem maximal zulässigen Ammoniaküberschußanteil;
Mittel zum Vergleichen der stromunterhalb des Katalysators (34) durch den Ammoniaksensor (40) gemessenen Ammoniakkonzentration mit einem zulässigen Ammoniakwert nach dem Katalysator,
Mittel zur Erhöhung der eingespritzten Menge an Ammoniakreduktionsmittel um einen vorgegebenen Betrag, wenn die Ammoniakkonzentration nach dem Katalysator kleiner als der zulässige Wert ist, und der Ammoniaküberschußanteil kleiner als der maximal zulässige Ammoniaküberschußanteil ist, sonst Mittel zur Senkung der eingespritzten Reduktionsmittelmenge um einen vorgegebenen Betrag, bis die Ammoniakkonzentration unter dem zulässigen Anteil und Wert liegt, und, wenn die Menge an eingespritztem Ammoniak erhöht wird,
Mittel zur Bestimmung einer NO_{X}-Wandlung anhand des von dem NO_{X}-Sensor gemessenen NO_{X}-Wertes und einer Voraussage eines NO_{X}-Wertes stromoberhalb des Katalysators,
Mittel zum Vergleichen der NO_{X}-Wandlung nach einer Erhöhung der eingespritzten Ammoniakreduktionsmittelmenge mit der NO_{X}-Wandlung vor der Erhöhung der Ammoniakreduktionsmittelmenge, und
Mittel zur weiteren Erhöhung der eingespritzten Ammoniakreduktionsmittelmenge nur dann, wenn die neue NO_{X}-Wandlung größer als der vorangehende NO_{X}-Wandlungswert ist, die Ammoniakkonzentration nach dem Katalysator kleiner als der zulässige Wert bleibt, und der Ammoniaküberschußanteil kleiner als der maximal zulässige Ammoniaküberschußanteil bleibt.

5. Motorsteuerung nach Anspruch 4, worin besagte Motorsteuerung des weiteren Mittel aufweist zum Senken der eingespritzten Reduktionsmittelmenge dann, wenn die Ammoniakkonzentration nach dem Katalysator nicht kleiner als der zulässige Wert bleibt, und der Ammoniaküberschußanteil nicht kleiner als der maximal zulässige Ammoniaküberschußanteil bleibt.

6. Motorsteuerung nach Anspruch 4 oder Anspruch 5, worin der vorgegebene Betrag der Erhöhung oder Senkung der eingespritzten Reduktionsmittelmenge ausreichend ist, das Verhältnis NH₃/NO_{X} jeweils um einen vorgegebenen Betrag zu erhöhen oder zu senken.

## Revendications

1. Procédé destiné à commander une injection de réducteur d'ammoniac dans un catalyseur à réduction catalytique sélective (34) couplé à un moteur à combustion interne (10), **caractérisé en ce que** le procédé comprend les étapes consistant à mesurer à l'aide d'un capteur de NOₓ (42) les NOₓ en aval du catalyseur (34), à mesurer à l'aide d'un capteur d'ammoniac (40) l'ammoniac en aval du catalyseur (34), à déterminer une fraction de surplus d'ammoniac à l'aide de la mesure de l'ammoniac provenant du capteur d'ammoniac (40) et une valeur pour l'ammoniac injecté, à comparer la fraction de surplus d'ammoniac à une fraction de surplus d'ammoniac admissible la plus élevée, à comparer la concentration en ammoniac mesurée en aval du catalyseur (34) par le capteur d'ammoniac (40) à un niveau admissible d'ammoniac après le catalyseur et à augmenter la quantité de réducteur d'ammoniac injecté d'une quantité prédéterminée si la concentration en ammoniac après catalyseur est inférieure au niveau admissible et si la fraction de surplus d'ammoniac est inférieure à la fraction de surplus d'ammoniac admissible la plus élevée, sinon à diminuer la quantité du réducteur injecté de la quantité prédéterminée jusqu'à ce que la concentration en ammoniac soit en dessous de la fraction et du niveau admissibles et, si la quantité d'ammoniac injecté est augmentée, à déterminer une conversion de NOₓ d'après la valeur de NOₓ mesurée par le capteur de NOₓ et une prédiction de NOₓ en amont du catalyseur, à comparer la conversion de NOₓ après une augmentation du réducteur d'ammoniac injecté à la conversion de NOₓ avant l'augmentation du réducteur d'ammoniac et à augmenter encore la quantité du réducteur d'ammoniac injecté uniquement si la nouvelle conversion de NOₓ est supérieure à la valeur précédente de la conversion de NOₓ, la concentration en ammoniac après catalyseur reste inférieure au niveau admissible et la fraction de surplus d'ammoniac reste inférieure à la fraction de surplus d'ammoniac admissible la plus élevée.

2. Procédé selon la revendication 1, dans lequel le procédé comprend en outre la diminution de la quantité du réducteur injecté de la quantité prédéterminée si la concentration en ammoniac après catalyseur ne reste pas inférieure au niveau admissible et la fraction de surplus d'ammoniac ne reste pas inférieure à la fraction de surplus d'ammoniac admissible la plus élevée.

3. Procédé selon la revendication 1 ou la revendication 2, dans lequel la quantité prédéterminée d'augmentation ou de diminution du réducteur injecté est suffisante pour augmenter ou diminuer respectivement le rapport NH₃/NOₓ d'une quantité prédéterminée.

4. Dispositif de commande de moteur électronique (12) comportant un moyen destiné à commander l'injection de réducteur d'ammoniac en amont d'un catalyseur à réduction catalytique sélective (34) couplé à un moteur à combustion interne (10), ledit dispositif de commande de moteur électronique (12) comprenant un moyen pouvant être activé pour recevoir une mesure des NOₓ en aval du catalyseur (34) provenant d'un capteur de NOₓ (42), recevoir une mesure de la concentration en ammoniac en aval du catalyseur (34) provenant d'un capteur d'ammoniac (40) et comprend un moyen destiné à déterminer une fraction de surplus d'ammoniac en utilisant la mesure de l'ammoniac provenant du capteur d'ammoniac (40) et une valeur pour l'ammoniac injecté, un moyen destiné à comparer la fraction de surplus d'ammoniac à une fraction de surplus d'ammoniac admissible la plus élevée, un moyen destiné à comparer la concentration d'ammoniac mesurée en aval du catalyseur (34) par le capteur d'ammoniac (40) à un niveau admissible d'ammoniac après catalyseur, un moyen destiné à augmenter la quantité du réducteur d'ammoniac injecté d'une quantité prédéterminée si la concentration d'ammoniac après catalyseur est inférieure au niveau admissible et la fraction de surplus d'ammoniac est inférieure à la fraction de surplus d'ammoniac admissible la plus élevée, sinon un moyen destiné à diminuer la quantité du réducteur injecté de la quantité prédéterminée jusqu'à ce que la concentration en ammoniac soit en dessous de la fraction et du niveau admissibles et si la quantité d'ammoniac injecté est augmentée, un moyen destiné à déterminer une conversion de NOₓ d'après la valeur de NOₓ mesurée par le capteur de NOₓ et une prédiction de NOₓ en amont du catalyseur, un moyen destiné à comparer la conversion de NOₓ après une augmentation du réducteur d'ammoniac injecté à la conversion de NOₓ avant l'augmentation du réducteur d'ammoniac et un moyen destiné à augmenter encore la quantité du réducteur d'ammoniac injecté uniquement si la nouvelle conversion de NOₓ est supérieure à la valeur précédente de la conversion de NOₓ, la concentration en ammoniac après catalyseur reste inférieure au niveau admissible et la fraction de surplus d'ammoniac reste inférieure à la fraction de surplus d'ammoniac admissible la plus élevée.

5. Dispositif de commande de moteur selon la revendication 4, où ledit dispositif de commande de moteur comprend en outre un moyen destiné à diminuer la quantité du réducteur injecté si la concentration en ammoniac après catalyseur ne reste pas inférieure au niveau admissible et la fraction de surplus d'ammoniac ne reste pas inférieure à la fraction de surplus d'ammoniac admissible la plus élevée.

6. Dispositif de commande de moteur selon la revendication 4 ou la revendication 5, dans lequel la quantité prédéterminée de l'augmentation ou de la diminution du réducteur injecté est suffisante pour augmenter ou diminuer respectivement le rapport NH₃/NOₓ d'une quantité prédéterminée.
